# EUROPEAN PATENT SPECIFICATION

(11) **EP 4 130 015 B1**
(45) Date of publication and mention of the grant of the patent: **01.01.2025**
(21) Application number: 22176659.5
(22) Date of filing: 01.06.2022
(51) Int. Cl.: C07F 15/00

(54) **IMPROVED PROCESS FOR THE MANUFACTURE OF HALOGENOBIS(ALKENE)RHODIUM(I) DIMERS OR HALOGENOBIS(ALKENE)IRIDIUM(I) DIMERS**
VERBESSERTES VERFAHREN ZUR HERSTELLUNG VON HALOGENOBIS(ALKEN)RHODIUM(I)DIMEREN ODER HALOGENOBIS(ALKEN)IRIDIUM(I)DIMEREN
PROCÉDÉ AMÉLIORÉ POUR LA FABRICATION DE DIMÈRES D'HALOGÉNOBIS(ALCÈNE)RHODIUM(I) OU DE DIMÈRES D'HALOGÉNOBIS(ALCÈNE)IRIDIUM(I)

(30) Priority: 06.08.2021 US 202117444643
(43) Date of publication of application: 08.02.2023
(73) Proprietor: Heraeus Precious Metals GmbH & Co. KG, 63450 Hanau (DE)
(72) Inventor: Kettler, Peter, Santa Fe Springs, CA 90670 (US); Walter, Richard, 63450 Hanau (DE); Petri, Annika, 63450 Hanau (DE)
(74) Representative: Heraeus IP

(56) References cited:
- CN-A- 103 896 989
- ONDERDELINDEN A.L. ET AL: "Chloro- and bromo-(alkene)iridium(I) complexes", INORGANICA CHIMICA ACTA, vol. 6, 1 January 1972 (1972-01-01), NL, pages 420 - 426, XP093004154, ISSN: 0020-1693, DOI: 10.1016/S0020-1693(00)91830-9
- "Inorganic Syntheses : Reagents for Transition Metal Complex and Organometallic Syntheses", 1 January 1990, JOHN WILEY & SONS, INC., Hoboken, NJ, USA, ISBN: 978-0-471-52619-3, article CRAMER RICHARD ET AL: "Di-[mu]-Chloro-Tetrakis(Ethene)Dirhodium(I): [Rh(Cl)(C 2 H 4 ) 2 ] 2 : Reagents for Transition Metal Complex and Organometallic Syntheses", pages: 86 - 88, XP093004087, DOI: 10.1002/9780470132593.ch21
- "Inorganic Syntheses : Reagents for Transition Metal Complex and Organometallic Syntheses", 1 January 1990, JOHN WILEY & SONS, INC., Hoboken, NJ, USA, ISBN: 978-0-471-52619-3, article CRAMER RICHARD ET AL: "Di-[mu]-Chloro-Tetrakis(Ethene)Dirhodium(I): [Rh(Cl)(C 2 H 4 ) 2 ] 2 : Reagents for Transition Metal Complex and Organometallic Syntheses", pages: 86 - 88, XP093004087, DOI: 10.1002/9780470132593.ch21
- CRAMER RICHARD: "[mu]-Dichlorotetraethylenedirhodium(I)", INORGANIC CHEMISTRY, vol. 1, no. 3, 1 August 1962 (1962-08-01), Easton , US, pages 722 - 723, XP093004099, ISSN: 0020-1669, DOI: 10.1021/ic50003a061
- ONDERDELINDEN A.L. ET AL: "Chloro- and bromo-(alkene)iridium(I) complexes", INORGANICA CHIMICA ACTA, vol. 6, 1 January 1972 (1972-01-01), NL, pages 420 - 426, XP093004154, ISSN: 0020-1693, DOI: 10.1016/S0020-1693(00)91830-9

## Description

The invention relates to an improved process for the manufacture of

halogenobis(alkene)rhodium(I) dimers or halogenobis(alkene)iridium(I) dimers. Chlorobis(ethylene)rhodium(I) dimer or Di-µ-chlorotetrakis(ethylene)dirhodium(I) is the most well-known representative of halogenobis(alkene)rhodium(I) dimers and halogenobis(alkene)iridium(I) dimers. Chlorobis(ethylene)rhodium(I) dimer has the formula:

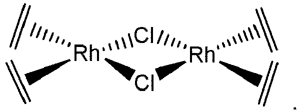

Chlorobis(ethylene)rhodium(I) dimer has been utilized in organic synthesis as a homogenous catalyst often in the presence of specialized ligands. Specific reactions of note include hydrogenation of carbon-carbon double bonds, addition of organometallic reagents to activated alkenes, 1,2-addition of organometallic reagents, the catalysis of addition/cyclization cascades and the decarbonylative coupling of alkenes and arenesulfonyl and aroyl chlorides.

The chlorobis(ethylene)rhodium(I) dimer was first reported in the literature by R. Cramer in 1962, see R. Cramer in Inorganic Chemistry, Vol. 1, No. 3, August, 1962, pages 722 - 723. The chlorobis(ethylene)rhodium(I) dimer can be prepared by treating an aqueous methanolic solution of hydrated rhodium trichloride with ethylene according to the following equation: 2 RhCl₃(H₂O)₃ + 6 C₂H₄ → Rh₂Cl₂(C₂H₄)₄ + 2 CH₃CHO + 4 HCl + 4 H₂O. This prior art synthesis procedure is disclosed in detail in Inorganic Syntheses, Volume XV, McGraw-Hill, Inc., 1974, pages 14 - 16. The yield is reported as 60 - 65 % (first crop) or 75 % (combined yield of first crop plus second crop). The first crop is obtained by harvesting and drying the precipitated product and the second crop can be obtained by further treatment of the filtrate with ethylene after neutralization of the filtrate with NaOH.

Further disclosures on processes for the manufacture of complexes of type [Rh(Hal) (R1R2C=CR3R4)2]2 can be found in Cramer et al. in "Inorganic Synthesis: Reagents for Transition Metal Complex and Organometallic Synthesis", 1990, Wiley & Sons, pages 86-88. Further disclosures are in CN103896989.

Object of the invention was to develop a synthesis procedure allowing for a high yield of chlorobis(alkene)rhodium(I) dimers or chlorobis(alkene)iridium(I) dimers and without a need to generate a second crop like in the prior art synthesis procedure. It was also an object to provide a synthesis procedure suitable for scale-up for an industrial process and with a high space time yield.

Unexpectedly and surprisingly, the object can be solved by a process for the manufacture of a complex of the formula [Rh(HaI)(R¹R²C=CR³R⁴)₂]₂ HaI = Cl (chlorine), Br (bromine) and R¹R²C=CR³R⁴ = a gaseous mono olefin with 2 to 4 carbon atoms, the process comprising the steps:
(1) preparing an aqueous alcoholic solution of a RhHaI₃ hydrate salt,
(2) reacting the dissolved RhHaI₃ hydrate salt with the gaseous mono olefin R¹R²C=CR³R⁴ under formation of precipitated [Rh(HaI)(R¹R²C=CR³R⁴)₂]₂,
(3) optionally, cooling the reaction mixture obtained after conclusion of step (2) down to a temperature in the range of > 0 to 10 °C and keeping it there, and
(4) collecting and drying the precipitated [Rh(HaI)(R¹R²C=CR³R⁴)₂]₂,
characterized in that the temperature of the reaction mixture during step (2) is kept in a range of 15 to 30 degrees Celsius by adequately cooling of the reaction mixture by conventional internal and/or external cooling means.

According to the claimed process, the precious metal M is Rh and Hal is Cl or Br. According to a preferred embodiment, the process of the invention is a process for the manufacture of a complex of the formula [RhCI(R¹R²C=CR³R⁴)₂]₂.

In a most preferred embodiment, the precious metal M is Rh, Hal is Cl and R¹R²C=CR³R⁴ is ethylene C₂H₄. In other words, in this most preferred embodiment, the process of the invention is a process for the manufacture of [RhCI(C₂H₄)₂]₂.

In step (1) of the process of the invention an aqueous alcoholic solution of a MHaI₃ hydrate salt with M = Rh and HaI = Cl, or Br is prepared. Preferably, M denotes Rh and Hal denotes Cl.

It may be expedient, when the purity of the precious metal M in the form of RhHaI₃ hydrate salt is of standard reagent grade.

It is expedient to dissolve the RhHaI₃ hydrate salt in a minimal amount of water, for example, according to a concentration in the range of 2 to 4 mol of precious metal Rh per liter of aqueous solution, preferably in the range of 2.5 to 3.5 mol of precious metal Rh per liter of aqueous solution, and to further dilute it with a water-miscible alcohol. The water-miscible alcohol may be selected from methanol, ethanol, isopropanol or any mixture thereof. It is preferred to work with methanol only. It is preferred to introduce the small volume of aqueous RhHaI₃ hydrate salt solution into the bigger volume of the alcohol solvent.

A typical concentration of the aqueous alcoholic solution prepared in step (1) lies in the range of 0.2 to 0.4 mol of precious metal Rh per liter of aqueous alcoholic solution, preferably in the range of 0.25 to 0.35 mol of precious metal Rh per liter of aqueous alcoholic solution.

In step (2) of the process of the invention the dissolved RhHaI₃ hydrate salt is reacted with a gaseous mono olefin R¹R²C=CR³R⁴ having 2 to 4 carbon atoms under formation of precipitated [Rh(HaI)(R¹R²C=CR³R⁴)₂]₂.

As becomes apparent from the above, the reaction takes place in aqueous alcohol matrix.

The mono olefin R¹R²C=CR³R⁴ having 2 to 4 carbon atoms is a gas under standard conditions.

Examples include ethylene, propylene and any isomer of butylene, with ethylene being the preferred mono olefin.

The mono olefin gas is reacted with the dissolved RhHaI₃ hydrate salt by simply making contact with each other, i.e. the mono olefin gas is utilized as a reaction atmosphere or, preferably, it is actively bubbled into and through the aqueous alcoholic solution. The mono olefin gas flow rate may be in the range of, for example, 2 to 3 liter per hour and per liter volume of reactor, preferably in the range of 2.5 to 2.75 liter per hour and per liter volume of reactor. There is no need to work under pressure, i.e. step (2) can be performed at normal pressure without making use of an autoclave or the like.

The gaseous mono olefin is supplied in stoichiometric excess amount during step (2). Over the entire step (2) it may be worked with a molar ratio of, for example, 1 mol of precious metal Rh : > 3 to 10 mol of the mono olefin, typically > 7 to 10 mol of the mono olefin.

It is expedient to stir the reaction mixture during step (2).

It is expedient when step (2) has a duration in the range of 12 to 24 hours, preferably in the range of 15 to 18 hours. A longer reaction time does not result in a remarkably higher yield of [Rh(HaI)(R¹R²C=CR³R⁴)₂]₂, which precipitates during step (2).

It is essential to keep the temperature of the reaction mixture during step (2) in a range of 15 to 30 °C, preferably in a range of 20 to 25 °C. Exceeding or undercutting said temperature range has an adverse effect on the yield. Keeping the temperature in said range is achieved by adequately cooling of the reaction mixture by conventional internal and/or external cooling means. Without such cooling, the temperature of the reaction mixture may rise to 35 to 40 °C, for example.

After conclusion of step (2) an optional step (3) may take place, in the course of which the reaction mixture obtained is cooled down to a temperature in the range of > 0 to 10 °C and kept there; i.e. after cooling the reaction mixture to > 0 to 10 °C, that temperature is maintained for a period of, for example, 2 to 3 hours.

The > 0 to 10 °C cool reaction mixture may be stirred during such optional step (3) and feeding of the mono olefin gas may be stopped or may preferably be maintained.

After conclusion of step (2) or, as the case may be, after conclusion of optional step (3) a step (4) of collecting and drying the precipitated [Rh(HaI)(R¹R²C=CR³R⁴)₂]₂ takes place.

The precipitated [Rh(HaI)(R¹R²C=CR³R⁴)₂]₂ can be collected by any conventional solid-liquid separation procedure like, for example, filtration of the suspension obtained after conclusion of step (2) or of optional step (3) through a Nutsche filtration apparatus or a similar device. The product may be washed with a minimum amount of alcohol solvent before drying it or it may be dried directly. Preferably, drying can be performed at a temperature in the range of 20 to 25 °C in vacuum.

The yield (first crop yield) of [Rh(HaI)(R¹R²C=CR³R⁴)₂]₂ prepared according to the process of the invention is in the range of, for example, 82 to 87 % and thus remarkedly improved compared to that of the prior art process, and this even without having generated a second crop. The purity and quality of the [Rh(HaI)(R¹R²C=CR³R⁴)₂]₂ obtained is similar to that made according to the prior art procedure.

The process of the invention can be run on an industrial process scale with a high space time yield. For example, 10.5 kg of [RhCI(C₂H₄)₂]₂ can be produced from a 200 liter scale reaction. For comparison purposes, if the [RhCI(C₂H₄)₂]₂ was scaled **directly** from the prior art procedure only around 4.8 kg of [RhCI(C₂H₄)₂]₂ would be produced.

### Example 1 (according to the invention):

In a 4 L beaker equipped with a stir bar and watch glass was charged 1500 ml H2O. The solvent was heated to 70 °C and 1200 g Rh(III) chloride hydrate were added in portions over 3 hours. After complete addition of Rh(III) chloride hydrate the solution was heated for an additional hour. The Rh(III) chloride solution was then allowed to cool and at < 40° C, the solution was filtered through a 1-micron glass membrane to remove any insolubles and the membrane was washed with a minimal amount of water (50 ml).

A separate 22 L reactor was equipped with a mechanical stirrer, gas dispersion tube, gas inlet tube attached to a mineral oil bubbler and thermowell was charged with 12.0 L methanol. With medium agitation the Rh(III) chloride solution was added to the 22 L reactor and the filter flask was washed with an additional 1200 ml methanol. Ethylene gas was bubbled into the reactor with enough pressure that vigorous bubbling was observed in the mineral oil bubbler. Bubbling of ethylene was continued for 15 h. The reactor was placed in a water bath to maintain the temperature at < 25 °C. The rate of ethylene bubbling required adjustment from time to time during the course of the reaction due to uptake of the ethylene and formation of [RhCI(C₂H₄)₂]₂. In total 1020 g of ethylene were bubbled through. After 12 h, the reaction mixture was cooled to < 10° C. At 15 h, ethylene bubbling was ceased, and the product was harvested on a filter plate via vacuum filtration. The product was washed with a minimal amount of methanol (150 ml) and pulled dried on the filter plate for 15-20 min. The [RhCI(C₂H₄)₂]₂ was then transferred to a drying tray and dried to constant weight in a vacuum oven at ambient temperature. The yield was 809.8 g (85% yield). The [RhCI(C₂H₄)₂]₂ was then screened and placed in an appropriate (amber glass) container under inert argon atmosphere. The product container was stored in a refrigerated environment of < 5 °C.

### Comparative Example 2:

Example 1 was repeated with the only difference that no means for cooling were taken, i.e. the reactor was not placed in a water bath to maintain the temperature at < 25 °C. The yield was 638.3 g (67% yield).

## Claims

1. A process for the manufacture of a complex of the formula [RhHaI(R¹R²C=CR³R⁴)₂]₂ with Hal = Cl or Br; and R¹R²C=CR³R⁴ = a gaseous mono olefin with 2 to 4 carbon atoms, the process comprising the steps:
(1) preparing an aqueous alcoholic solution of a RhHaI₃ hydrate salt,
(2) reacting the dissolved RhHaI₃ hydrate salt with the gaseous mono olefin R¹R²C=CR³R⁴ under formation of precipitated [RhHaI(R¹R²C=CR³R⁴)₂]₂,
(3) optionally, cooling the reaction mixture obtained after conclusion of step (2) down to a temperature in the range of > 0 to 10 °C and keeping it there, and
(4) collecting and drying the precipitated [RhHaI(R¹R²C=CR³R⁴)₂]₂,
wherein the temperature of the reaction mixture during step (2) is kept in a range of 15 to 30 °C by adequately cooling of the reaction mixture by conventional internal and/or external cooling means.

2. The process of claim 1, wherein Hal is Cl.

3. The process of claim 1 or 2, wherein R¹R²C=CR³R⁴ is ethylene C₂H₄.

4. The process of any one of the preceding claims, wherein during step (1) the RhHaI₃ hydrate salt is dissolved in water according to a concentration in the range of 2 to 4 mol of Rh per liter of aqueous solution and further diluted with a water-miscible alcohol according to a concentration in the range of 0.2 to 0.4 mol of Rh per liter of aqueous alcoholic solution.

5. The process of claim 4, wherein the water-miscible alcohol is selected from methanol, ethanol, isopropanol or any mixture thereof.

6. The process of claim 4 or 5, wherein the water-miscible alcohol is methanol.

7. The process of any one of the preceding claims, wherein the mono olefin gas is utilized as a reaction atmosphere or it is actively bubbled into and through the aqueous alcoholic solution.

8. The process of claim 7, wherein the mono olefin gas flow rate is in the range of 2 to 3 liter per hour and per liter volume of reactor.

9. The process of any one of the preceding claims, wherein the mono olefin is supplied in stoichiometric excess amount during step (2).

10. The process of any one of the preceding claims, wherein step (2) has a duration in the range of 12 to 24 hours.

11. The process of any one of the preceding claims, wherein the temperature of the reaction mixture during step (2) is kept in a range of 20 to 25 °C.

12. The process of any one of the preceding claims, wherein step (3) takes place, and wherein the > 0 to 10 °C cool reaction mixture is kept at such temperature for 2 to 3 hours.

## Patentansprüche

1. Verfahren für die Fertigung eines Komplexes der Formel [RhHaI(R¹R²C=CR³R⁴)₂]₂, wobei Hal = Cl oder Br; und R¹R²C=CR³R⁴ = ein gasförmiges Monoolefin mit 2 bis 4 Kohlenstoffatomen, das Verfahren umfassend die Schritte:
(1) Herstellen einer wässrigen alkoholischen Lösung eines RhHaI₃-Hydratsalzes,
(2) Reagieren des gelösten RhHaI₃-Hydratsalzes mit dem gasförmigen Monoolefin R¹R²C=CR³R⁴ unter Bildung von ausgefälltem [RhHaI(R¹R²C=CR³R⁴)₂]₂,
(3) optional, Abkühlen des Reaktionsgemischs, das nach Abschluss von Schritt (2) erhalten wird, auf eine Temperatur in dem Bereich von > 0 bis 10 °C und Halten von dieser dort, und
(4) Sammeln und Trocknen des ausgefällten [RhHaI(R¹R²C=CR³R⁴)₂]₂, wobei die Temperatur des Reaktionsgemischs während Schritt (2) durch hinreichendes Kühlen des Reaktionsgemischs durch herkömmliche interne und/oder externe Kühlmittel in einem Bereich von 15 bis 30 °C gehalten wird.

2. Verfahren nach Anspruch 1, wobei Hal Cl ist.

3. Verfahren nach Anspruch 1 oder 2, wobei R¹R²C=CR³R⁴ Ethylen C₂H₄ ist.

4. Verfahren nach einem der vorstehenden Ansprüche, wobei während Schritt (1) das RhHaI₃-Hydratsalz in Wasser gemäß einer Konzentration in dem Bereich von 2 bis 4 Mol Rh pro Liter wässriger Lösung gelöst und ferner mit einem wassermischbaren Alkohol gemäß einer Konzentration in dem Bereich von 0,2 bis 0,4 Mol Rh pro Liter wässriger alkoholischer Lösung verdünnt wird.

5. Verfahren nach Anspruch 4, wobei der wassermischbare Alkohol aus Methanol, Ethanol, Isopropanol oder einem beliebigen Gemisch davon ausgewählt ist.

6. Verfahren nach Anspruch 4 oder 5, wobei der wassermischbare Alkohol Methanol ist.

7. Verfahren nach einem der vorstehenden Ansprüche, wobei das Monoolefingas als eine Reaktionsatmosphäre verwendet wird oder aktiv in und durch die wässrige alkoholische Lösung geperlt wird.

8. Verfahren nach Anspruch 7, wobei die Monoolefingasdurchflussrate in dem Bereich von 2 bis 3 Liter pro Stunde und pro Liter Reaktorvolumen liegt.

9. Verfahren nach einem der vorstehenden Ansprüche, wobei das Monoolefin während Schritt (2) in stöchiometrischer Überschussmenge zugeführt wird.

10. Verfahren nach einem der vorstehenden Ansprüche, wobei Schritt (2) eine Dauer in dem Bereich von 12 bis 24 Stunden aufweist.

11. Verfahren nach einem der vorstehenden Ansprüche, wobei die Temperatur des Reaktionsgemischs während Schritt (2) in einem Bereich von 20 bis 25 °C gehalten wird.

12. Verfahren nach einem der vorstehenden Ansprüche, wobei Schritt (3) stattfindet und wobei das > 0 bis 10 °C kühle Reaktionsgemisch bei derartiger Temperatur für 2 bis 3 Stunden gehalten wird.

## Revendications

1. Procédé de fabrication d'un complexe de la formule [RhHaI(R1R2C = CR3R4)2]2 avec Hal = Cl ou Br ; et R1R2C = CR3R4 = une mono oléfine gazeuse avec 2 à 4 atomes de carbone, le procédé comprenant les étapes consistant à :
(1) préparer une solution aqueuse alcoolique d'un sel hydraté RhHal3,
(2) faire réagir le sel hydrate RhHal3 dissous avec la mono oléfine gazeuse R1R2C = CR3R4 sous la formation de [RhHaI(R1R2C=CR3R4)2]2 précipité,
(3) éventuellement, refroidir le mélange réactionnel obtenu à l'issue de l'étape (2) jusqu'à une température comprise dans la plage allant de > 0 à 10 °C et le maintenir à cette température, et
(4) recueillir et sécher le [RhHaI(R1R2C = CR3R4)2]2 précipité, dans lequel la température du mélange réactionnel au cours de l'étape (2) est maintenue dans une plage allant de 15 à 30 °C par un refroidissement adéquat du mélange réactionnel à l'aide de moyens de refroidissement internes et/ou externes conventionnels.

2. Procédé selon la revendication 1, dans lequel Hal est Cl.

3. Procédé selon la revendication 1 ou 2, dans lequel R1R2C = CR3R4 est de l'éthylène C2H4.

4. Procédé selon l'une quelconque des revendications précédentes, dans lequel, au cours de l'étape (1), le sel hydrate RhHal3 est dissous dans l'eau à une concentration dans la plage allant de 2 à 4 mol de Rh par litre de solution aqueuse et dilué avec un alcool miscible dans l'eau à une concentration dans la plage allant de 0,2 à 0,4 mol de Rh par litre de solution aqueuse alcoolique.

5. Procédé selon la revendication 4, dans lequel l'alcool miscible à l'eau est choisi parmi le méthanol, éthanol, isopropanol ou un quelconque mélange de ceux-ci.

6. Procédé selon la revendication 4 ou 5, dans lequel l'alcool miscible à l'eau est le méthanol.

7. Procédé selon l'une quelconque des revendications précédentes, dans lequel le gaz de mono oléfine est utilisé comme atmosphère de réaction ou est activement insufflé dans et à travers la solution alcoolique aqueuse.

8. Procédé selon la revendication 7, dans lequel le débit de gaz mono oléfinique est dans la plage allant de 2 à 3 litres par heure et par litre de volume de réacteur.

9. Procédé selon l'une quelconque des revendications précédentes, dans lequel la mono oléfine est fournie en quantité stœchiométrique excédentaire au cours de l'étape (2).

10. Procédé selon l'une quelconque des revendications précédentes, dans lequel l'étape (2) a une durée dans la plage allant de 12 à 24 heures.

11. Procédé selon l'une quelconque des revendications précédentes, dans lequel la température du mélange réactionnel au cours de l'étape (2) est maintenue dans une plage allant de 20 à 25 °C.

12. Procédé selon l'une quelconque des revendications précédentes, dans lequel l'étape (3) a lieu, et dans lequel le mélange réactionnel refroidi à une température allant de > 0 à 10 °C est maintenu à cette température pendant 2 à 3 heures.
